(19) Europäisches Patentamt
European Patent Office
Office européen des brevets

(11) **EP 3 647 280 B1**

(12) **EUROPEAN PATENT SPECIFICATION**

(45) Date of publication and mention
of the grant of the patent:
**30.10.2024 Bulletin 2024/44**

(51) International Patent Classification (IPC):
**C03B 5/193** (2006.01)     **C03B 5/03** (2006.01)
**C03B 5/167** (2006.01)     **C03B 5/185** (2006.01)

(21) Application number: **19176661.7**

(22) Date of filing: **27.05.2019**

(52) Cooperative Patent Classification (CPC):
**C03B 5/193; C03B 5/03; C03B 5/1672;
C03B 5/185;** Y02P 40/50

(54) **METHOD AND APPARATUS OF CONTINUOUS INTENSIVE GLASS MELTING**

VERFAHREN UND VORRICHTUNG ZUM KONTINUIERLICHEN INTENSIVEN GLASSCHMELZEN

PROCÉDÉ ET APPAREIL DE FUSION DE VERRE INTENSIVE CONTINUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.10.2018 PL 42760118**

(43) Date of publication of application:
**06.05.2020 Bulletin 2020/19**

(73) Proprietor: **Forglass Spolka z Ograniczona
Odpowiedzialnoscia
30-415 Krakow (PL)**

(72) Inventors:
• **Klisch, Marian
  38-400 Krosno (PL)**
• **Zomerski, Krzysztof
  30-198 Krakow (PL)**

• **Dylag, Andrzej
  32-091 Michalowice (PL)**
• **Jedrzejczyk, Leszek
  97-310 Baby (PL)**
• **Knast, Piotr
  31-157 Krakow (PL)**
• **Kaim, Piotr
  34-620 Jodlownik (PL)**

(74) Representative: **AOMB Polska Sp. z.o.o.
ul. Rondo Ignacego Daszynskiego 1
00-843 Warsaw (PL)**

(56) References cited:
**EP-A1- 0 078 715       EP-A2- 0 270 518
CH-A- 439 606            US-A- 3 268 320
US-A- 3 305 340          US-B1- 6 334 337**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD OF THE INVENTION

The invention relates to a method of continuous intensive glass melting from a batch containing raw materials of mineral and/or chemical origin, wherein the batch is continuously fed to a furnace and Joule heated by a plurality of electrodes and a plurality of gas streams are injected to a melt. The invention also relates to an electrode-bubbler for carrying out the method of continuous intensive glass melting from a batch containing raw materials of mineral and/or chemical origin.

### PRIOR ART

Numerous methods of continuous glass melting methods are known. They can be divided into a few groups, discussed briefly below.

### Continuous glass melting methods enhanced by an electric boost

Use of electricity as the only or additional energy source for glass melting or boosting one of the melting steps has been known since the beginning of the 20th century.

For example, US 1,594,496 describes a method for improving fining process by means of a line of electrodes immersed in the molten glass surface from above.

US 2,417,913 discloses a fully electrically-heated glass melting furnace having electrodes immersed in the molten glass for direct delivery of the electric energy.

Further, US 2,600,490 describes a method of continuos glass melting boosted by electricity introduced directly to molten glass through electrodes immersed therein. Such electric boost is declared to significantly improve the furnace melting capacity.

Yet further, US 2,978,526 discloses an electrode assembly for glass melting furnace to be immersed in the molten glass from above.

US 4,012,218 describes a method for melting glass and a furnace with variable depth, namely wherein a refining zone is at least twice as deep as the melting zone. Each of the zones is provided with electrodes for boosting the heating process.

US 3,576,385 discloses a multi-segmented electrode mounted in melting tank walls of the glass melting furnace. The electrode part immersed in molten glass comprises tubular elements screwed together. Inside the tubular part of the electrode a water-cooled rod is inserted in a slidable manner. Such design is declared to make the electrode less prone to corrosive wear due to contact with molten glass.

### Continuous glass melting methods supported by bubbling

US 2,254,079 discloses a method and apparatus for melting and refining glass, wherein a system of bubbling nozzles installed in shallow part of a melting tank is used.

Further, US 2,3872,22 discloses a method of refining glass continuously molten in a furnace provided a system of bubblers arranged in rows extending transversely of the main axis of the furnace.

Yet further, US 2,909,005 discloses a continuous glass melting furnace, which at its bottom, at any position from a doghouse to a throat, a system of bubbling nozzles is arranged, configured in parallel lines and/or in a V-shape and/or in a triangle and/or in a semicircle and/or in an arc or any combination of these arrangements.

US 3,294,512 describes a design of a continuous glass melting furnace without throat, provided with a deep melting part and a shallow refining part, separated by a step. In front of the step one or two bubbling nozzle lines is installed to stop and turn back molten glass containing residues of unmelted batch by return current forced by gas streams fed by the bubbling nozzles.

US 3,397,973 discloses a bubbling nozzle design having a channel for feeding an agent capable of locally cooling down the molten glass. Such arrangements allows to periodically switch on/off a selected nozzle according to process requirements.

Moreover, US 3,622,296 discloses a metod of fining glass, in particular borosilicate glass by means of sodium chloride used as a batch component and helium injected to molten glass by bubbling nozzles.

US 3,853,524 describes a bubbler used in glass melting furnaces. The bubbler includes a molybdenum tube having a passageway therethrough, wherein the outer surface of the tube and the passageway wall are coated with a layer of cement, such as molybdenum disilicide. Such design is declared to enable producing monolithic bubbling tubes, thereby avoiding drawbacks of two-element nozzles composed of a molybdenum part operating in the molten glass environment and a steel part coated with nickel-palladium alloy and arranged in the ceramic bottom of the furnace.

In turn, US 5,188,649 and US 5,340,372 a proces for vitrifying asbestos-containing waste, infectious waste, toxic materials and radioactive waste was decribed. The process is performed in an electic furnace having at least two electrodes and at least one bubbling nozzle for supplying air, or preferably argon or nitrogen. The waste is molten together with alkali compounds. High alkalinity of the melt results in its increased electical conductivity, thereby slowing down the melting process. Gas bubbles released from the nozzle(s) mix and foam the batch and so reduce the cross-section for current flow, thereby increasing the molten batch resistance and heat power concentration which intensifies melting process. The nozzle(s) are made of chromium-nickel alloys, preferably Inconel 690, so that the upper limit of the melt temperature shall not exceed 1100°C, which are typical conditions for ladle furnaces used for waste vitrification.

**Continuous glass melting methods supported with electric boost and bubbling**

US 3,268,320 discloses a glass furnace, wherein forced convective current is obtained by means of controlled gas flow through bubbling nozzles or Joule energy released between electrodes, both systems being installed at the furnace bottom.

Further, US 6,334,337 discloses a joule-heated ladle furnace with oriffice installed in bottom for melt discharge. The furnace is designed to vitrify asbestos-containing waste, infectious waste, toxic materials and radioactive waste by melting them with alkali compounds and/or glass cullet. A bubbler made of chromium-nickel alloy is arranged close to furnace bottom, above the level of molten metal deposit formed from waste being neutralized. The bubbler is electrically connected to joule energy-delivering electrodes. The document describes the improvement of apparatus for waste vitrifying known from US 5,188,649 and in US 5,340,372 discussed above. The presented furnace design is based on use of bubbling nozzle, coupled as a third electrode into an electric circuit of joule-heating electrodes. In order to improve bubbling nozzle corrosion resistance, a multilayer construction was proposed, especially in gas (air/nitrogen/argon) outlets, where inserts made of platinum or its alloys with ruthenium, rhodium, palladium, osmium and iridium, while the gas flow takes place in channels having ceramic walls.

The furnace described in US 6,334,337 is, however, totally unsuitable for use in a continuous glass melting process from a batch containing raw materials of mineral and/or chemical origin, comprising the stages of batch heat up, reactions between batch components, dissolution of unreacted raw material residues in a primary melt, fining and resorption of small bubbles remaining after fining during cooling down of the molten glass. There are several reasons for such incompatibility includes the number, design and material of bubbling nozzles, a method for installing the nozzle(s) in the melt, the use temperature upper and the nature of gas-melt interaction. Firstly, US 6,334,337 discloses the use of a single bubbling nozzle. While such nozzle is indeed capable of mixing the melt obtained by vitrifying of waste in a ladle furnace, it does not allow to generate forced directional convective currents in a continuous glass melting furnace in a controlled manner. Secondly, the bubbler of US 6,334,337 has a gas outlet arranged in its lowest portion close to the bottom of the ladle furnace. As a result the melt is first foamed to increase its electric resistance and only then the joule-heat absorption is increased in the upper part of the melt. Such sequence results in a random flow pattern in the melt, preventing from the following sequence required in a continuous glass melt process to generate fast directed convective currents pattern in the molten glass: (i) heating up a selected volume of molten glass, (ii) laminar upward flow of the heated molten glass due to temperature gradient, and (iii) its fast flow towards the surface, mechanically forced by a gas stream injected by nozzles located at the electrode tip. Further, US 6,334,337 discloses a bubbler made of chromium-nickel alloy with platinum or its alloy serving as an additional electrode. The upper limit of working temperature of such bubbler is about 1100°C. Such material is, however, unable to withstand exposure to higher temperatures occurring in continuous intensive glass melt processes, which typically exceed 1500°C, and in which even the coldest melt regions are hotter than 1250°C. Yet further, the design of bubbler-electrode of US 6,334,337 and the way it is immersed in the molten glass from the top are not applicable in a continuous glass furnace fed with raw materials and cullet, wherein major part of energy is delivered to the melt from a gas/oil combustion area, mostly because there are no materials available that could withstand such extreme conditions during a typical furnace campaign (above 8 years).

US 3 305 340 A discloses a method of generating currents of moving glass in a tank of molten glass with the use of electro-bubblers.

Finally, WO 2014036979 A1 discloses a method for continuous glass melting under controlled convection of glass melt and glass melting furnace for making the same. The method is related to melting of glass containing undissolved sand remnants and gas bubbles in a furnace containng a rectangular basin provided with a weir wall and energy sources such as burners, electrodes and other suitable energy sources arranged in glass melting zone, wherein a helical glass melt flow is obtained by generating longitudinal and transverse temperature gradients at longitudinal to transverse gradient ratio not lower than 1 and not higher than 30. The method is limited to intensifying melting process by generating helical convective currents.

**Prior art summary**

In general, methods of continuous intensive glass melting from a batch containing raw materials of mineral and/or chemical origin include steps of batch heat up, reactions between batch components, dissolution of unreacted raw materials residues in a primary melt and - as most frequently used option - melt fining resulting from diffusion of gaseous components dissolved in the molten glass into gas bubbles once these components reach thermodynamically defined conditions of temperature and partial pressure, and resorption of small bubbles remaining in molten glass after fining. Apart from sand forming a major source of silica, the raw materials used for continuous intensive glass melting processes include, but are not limited to, dolomite (source of magnesium carbonate and calcium carbonate), limestone (source of calcium carbonate), soda ash (source of sodium carbonate), potash (source of potassium carbonate), barium and/or lithium carbonates.

Known methods of intensifying glass melting process (whole or selected step) based on Joule-heat application using electrodes or by additional convective currents generated in molten glass by gas streams injected by bubbling nozzles always considered separated functionality of electrodes and bubblers operated as independent elements even in cases both types of elements are provided in the same furnace. Typically electrodes and bubbling nozzles are arranged in separate, geometrically remote systems within a furnace, which significantly impedes or event prevents effective and coordinated operation of local energy sources (electrodes) and local sources of forced convective currents (bubblers). As already mentioned above the electrode-bubbler arrangement of US 6,334,337, wherein the nozzle is coupled into a common electric circuit with the heating electdrodes, is useful only for melting materials at temperatures below 1100°C in a fully electric furnace. On the other hand, the method for continuous glass melting of WO 2014036979 A1 based on controlled forced convection is limited exclusively to helical currents.

The main disadvantage of commonly used glass furnaces operating with gas or oil combustion in air or oxygen is slow and ineffective batch heat up. Relatively low efficiency of batch heat up by flames and flue gases results from three major reasons:

- low thermal conductivity of raw material mixture constituting the batch for glass melting, resulting in hindered direct heat absorption;
- relatively high emissivity of batch leading to back heat radiation into ceramic lining of the combustion space;
- low emissivity of flame, preventing direct energy transfer to batch and enforcing long and complicated energy transfer way: from flame and flues to ceramics of combustion space by radiation and convection, followed by reemission to molten glass.

These three restrictions result in most of energy is delivered to the batch by hot molten glass re-directed from hot spot area of the furnace by a return convective current. Such method allows to increase the utilization of energy delivered to the furnace, but at the same time limits maximal specific melting efficiency of currently used furnaces to approximately 4 Mg/($m^2$·d). Using good quality glass from hot spot area as the energy carrier also results in undesired mixing of the glass which is "fining-ready" with primary melt containing numerous unmelted sand grains and bubbles. Increasing a residence time of such glass in a furnace is a technological disadvantage.

Further, intensifying the batch heat up by means of electrodes without bubbling functionality, installed in the furnace bottom, is not effective enough, as in this case only convective current powered by temperature gradient can be utilized. On the other hand, the height of used electrodes limits the maximum basin depth in a melting zone, resulting in another drawback: the greater distance from the electrode top to the bottom surface of batch layer, the more energy is dispersed by randomly generated convective currents.

Using electrodes mounted in a furnace walls close to dog house area allows to effectively direct energy into the batch layer, but involves also some significant disadvantages. Namely, most of the energy is released in the immediate vicinity of the wall, which in view of corrosive and erosive activity of the batch results in fact refractory wear and reduced furnace campaign time. Further, the limitation of electrode positions to the furnace wall area significantly hinders the effective energy delivery to locations inside the melt which are distant from the walls.

Batch heat up acceleration using bubbling nozzles (without functionality of electrodes) arranged at the furnace bottom is also insufficiently effective, since the nozzles do not constitute an additional energy source, but merely provide additional mixing of the glass melt.

Finally, installing two separately controlled systems in a batch melting zone, i.e. electrodes and bubblers, involves two serious drawbacks: it is extremely difficult to coordinate the operation of both systems and it is impossible to optimize the geometrical layout of both systems due to contradictory requirements in a limited space.

Since the sum of the energy demand for heating up the raw materials of the batch and the energy required to complete endothermic reactions is over 70% of the entire melting energy needs in case of most glasses, improvement of energy and mass transfer mechanisms at this stage poses a significant problem.

## Summary of the Invention

The aim of the present invention was to provide a method of continuous intensive glass melting from a batch containing raw materials of mineral and/or chemical origin without the disadvantages of earlier solutions described above, including, in particular, providing the improvement of energy and mass transfer mechanisms at the batch heat up stage completed in a melting zone so as to reduce the time required to heat up the batch and completing the chemical reactions taking place therein upon the heat delivery. Thereby not only the efficiency of heating of the glass melt is increased, but also the process can be better optimized due to improved control and coordination of both the Joule-heating and gas bubbling. Further, by certain arrangements of electrode-bubblers according to the invention at the furnace bottom, described in working examples below, a number of additional advantageous effects can be obtained including evoking lateral convective currents accelerating the batch heat up in case of furnaces having two doghouses, enhancing reaction between batch components, preventing the glass melt from hot spot area from mixing with the primary melt, promoting plug flow of molten glass, etc. Yet further, use of natural gas as a bubbling gas additionally contributes to either intensifying melting process or reducing the amount of gas used in furnace heating burners. On the other hand, steam used as a bubbling gas accelerates sulphate fining of molten silicate glass.

The object of the present invention is a method of continuous intensive glass melting from a batch containing raw materials of mineral and/or chemical origin, wherein the batch is continuously fed to a furnace and Joule-heated by a plurality of electrodes and a plurality of bubbling gas streams is injected into a glass melt. In the method according to the invention each electrode is shaped as a hollow tube to form an electrode-bubbler for both heating the batch and injecting a bubbling gas stream into the melt, whereby the electrode-bubblers are arranged at the bottom of the furnace, preferably in a melting zone. Preferably, the batch also contains cullet.

In one preferred embodiment of the method according to the invention the bubbling gas stream is injected into the glass melt in a continuous manner. In another preferred embodiment the bubbling gas stream is injected into the glass melt periodically.

Preferably each electrode-bubbler is connected to at least one alternating current (AC) circuit.

According to the invention, the bubbling gas is selected from: (i) a hydrocarbon gas or a mixture of such gases; (ii) steam.

Another object of the present invention is an electrode-bubbler according to claim 6.

According to the invention, the hollow tubular element on its inner surface is provided with an oxidation protecting layer, preferably made of $MoSi_2$. In another preferred embodiment the hollow tubular element is made of material resistant to molten glass corrosion, preferably selected from molybdenum, silicon-doped molybdenum, silicon- and boron-doped molybdenum, molybdenum disilicide, tin oxide and graphite.

According to the invention, inside the hollow tubular element a protective insert is provided, comprising a longitudinal gas-transporting channel for injecting the bubbling gas into the glass melt, the protective insert being preferably made of $MoSi_2$.

According to the invention, inside the longitudinal gas-transporting channel of the protective insert a gas-permeable rod is coaxially arranged, comprising at least one channel for injecting the bubbling gas into the glass melt.

Preferably, the gas-permeable rod is made of porous material, in which channels for injecting the bubbling gas into the glass melt are formed by open pores extending along the longitudinal axis of the rod. The porous material is preferably selected from porous refractory ceramic materials, such as alumina; porous metals, preferably noble metals; porous ceramic-metallic composites; ceramic-metallic laminates of cylindrical layered structure.

Preferably, the channel(s) for injecting the bubbling gas into the glass melt is/are provided with an oxidation protecting layer, preferably made of $MoSi_2$

Plurality of electrode-bubblers (i.e. electrodes having full functionality of bubbling nozzles) arranged at the bottom of the furnace allows to complete much faster all the stages of a continuous intensive glass melting process, in particular the batch heat up and the stages controlled by diffusion through reaction product barrier by providing simultaneously and in a precisely controlled and coordinated manner both Joule energy and continuous or impulse stream of gas(es), thus generating sources of intensive convective currents in molten glass. This enables to direct these additional energy streams to points where it is most needed for enhancement of the selected step or the entire melting process.

The method according to the invention can be applied in any melting tank of known design, for melting any glass of known chemical composition, where homogeneous glass free of unmelted residues of raw materials is required and in most cases also allows to refine the resulting molten glass from all gas bubbles.

As the sum of energy demand for batch raw materials heat up and energy requirements for endothermic reaction completion is over 70% of entire melting energy needs in most glasses, the improvement of energy and mass transfer mechanisms resulting from using the electrode-bubblers according to the invention allows for significant reduction of time required for finalizing the glass melting step.

Reduction of time required for batch heat up and completion of chemical reactions inside the batch by installing a set of electrode-bubblers in a furnace, wherein melt surface is covered by the batch piles , removes the restraint of upper limits of specific glass output (approximately 4 Mg/(m$^2$·d) for existing furnaces).

Using integrated electrode-bubblers arranged at the furnace bottom in continuous intensive glass melting processes opens a number of opportunities for configuring the layouts of combined sources of both additional heating energy delivered to the melt and simultaneously forced intensive convective currents. Moreover, both phenomena occur one after another in a sequence: first the molten glass preheated by Joule heat generated in the vicinity of the closest electrodes is moved upwards by a thermal convective current to the operation area of bubbling nozzles (more specifically - the outlets thereof), and can be rapidly, i.e. maintaining its overheated state, transported towards the batch surface by much stronger convective current forced by bubbling. Since this effect can be realised using a limited number of electrode-bubblers, it is much easier to obtain coherent system of convective currents, cooperating with each other. Thereby the volume of melting tank can be used much more effectively for a sequence of steps including batch heat up, reactions between batch components, dissolution of sand grains remnants in the glass melt and/or fining. This allows to meet requirements for further improvement of specific melting indices of currently used designs of glass furnaces.

Furthermore, use of electrode-bubblers according to the invention also allows to improve kinetics of reactions between the batch components, since the rate thereof is limited by diffusion through product barrier. Such reactions include thermal decomposition of limestone and dolomite, reactions of soda ash with sand grains. Also certain physical process such as dissolution of relict sand grains in molten glass are accelerated by effective mixing conditions provided by electrode-bubblers.

Yet further, use of electrode-bubblers according to the invention also improves the efficiency of gas bubbles removal from the molten glass, also referred to as fining. Prior art methods based on electrode or bubbling nozzle systems arranged to form a line (a barrier) transverse to furnace longitudinal axis have their limitations resulting in reduced efficiency. Although barrier-like electric boost efficiently overheats molten glass in the bottom area, it generates a relatively weak upward convective current carrying glass with bubbles towards the surface. In deep melting tanks (> 1500 mm), part of the glass may be entrained by a pull current directly to throat without ascending a glass surface, resulting in growth of production reject due to the number of gas inclusions. This effect is particularly visible at the specific output increase over 3 Mg/(m$^2$·d).

A different problem occurs when a barrier formed of several bubbling nozzles is used. Namely, too cold glass may be transported towards the surface too rapidly, and in such case some additional time is required to heat it up to the required temperature. Since close to the melt surface energy is provided by combustion, the glass melt has be retained longer in a hot spot plane, thereby limiting the maximum specific glass output. Using electrode-bubblers according to the invention allows to optimize flow conditions within the melt and thereby avoid such undesired situations.

Using weir well (a physical barrier made of refractories arranged transversely to the furnace longitudinal axis) for improving the fining conditions is possible only for coloured glass, the composition of which allows to use refractories having high content of $Cr_2O_3$, which are characterized by the highest glass-induced corrosion resistance. Barriers made of AZS, used in basin of furnaces designed for melting flint glass, exhibit much shorter lifetime than any other ceramic refractory elements of melting tank of such furnaces. This poses a significant drawback of such barriers. In case of flint glass (which constitutes majority of container glass, float glass and tableware glass) a possibility of forming a barrier of electrode-bubblers according to the present invention arranged in a line not only eliminates disadvantages of barriers based on electrode and bubbling nozzle systems operating independently, but also allows to design melting tanks having depth exceeding 1500 mm.

As already mentioned, in one preferred embodiment the electrode-bubbler for use in a furnace designed for intensive glass melting according to present invention has a form of thick-walled tube made of electrically conductive material (such as molybdenum, silicon-doped molybdenum, molybdenum disilicide or tin oxide). Since the material most frequently used for electrodes designed to glass melting is molybdenum, only oxygen free gas could be blown through such tubular electrodes. Further, any break in the gas flow could result in molybdenum oxidation followed by MoOs sublimation, which is disadvantageous not only for the electrode as such but also for the entire furnace operation. As $MoSi_2$ or silicon-doped or silicon- and boron-doped molybdenum layers on a molybdenum electrode surface provide only provisional protection against oxidation (not longer than 2 months in molten soda-lime glass at temperature over 1400°C), the electrode-bubbler according to present invention based on molybdenum electrode should contain durable protective insert in a form of tube, preferably made of $MoSi_2$. Such $MoSi_2$ protective tubular insert is also highly recommend for an electrode-bubbler, wherein a gas-permeable rod is coaxially arranged, comprising at least one channel for injecting gas into the melt.

Due to chemical and thermal expansion compatibility, fused alumina ceramics or alumina ceramics covered with $MoSi_2$ are preferred materials for a gas-carrying insert according to present invention. The gas is released at the bubbler tip preferably located at the same level as the electrode top.

In some embodiments the gas-permeable rod is made of porous material, in which open pores extending along the longitudinal axis of the rod act as channels for injecting the bubbling gas into the glass melt. Any porous refractory ceramic material resistant to molten glass-induced corrosion at temperatures up to 1600°C can be used, such as in particular alumina. Another materials suitable for gas-permeable rods include porous metals, in particular noble metals, or porous ceramic-metallic composites as well as ceramic-metallic laminates of cylindrical layered structure could be used. In all cases open pores on external surface should be avoided. Thus, similarly to a gas-permeable rod made of alumina and comprising a plurality of channels, also a porous ceramic rod should be preferably covered with a $MoSi_2$ protective and open-pore fixing layer in addition to the $MoSi_2$ protective insert.

The electrode-bubblers according to the present invention can be arranged in any configuration at the bottom of batch melting zone (in lines parallel or transverse to the melting tank longitudinal axis, and/or forming V-shape and /or a triangle and/or a semicircle and/or an arc and/or be arranged at the bottom of a melting tank in a geometricaly dispersed pattern or in any combination of these arrangements) depending on their function in the melting process acceleration.

For the electrode-bubblers of the invention arranged in the batch melting zone at the furnace bottom, i.e. in close proximity of a doghouse, it is recommended to use air, steam or natural as a bubbling gas forcing convective currents in a glass melt. Using natural gas instead of air or steam allows to force the following reaction:

$$CH_4 + CO_2 \rightarrow 2CO + 2H_2 \qquad (1)$$

wherein $CO_2$ is generated during thermal decomposition of magnesium carbonate (originating from dolomite contained in a batch) and/or calcium carbonate (originating from dolomite and/or limestone contained in a batch) and/or reactive decomposition of sodium carbonate (originating from soda ash contained in a batch) and/or potassium carbonate (originating from potash contained in a batch) and/or barium and/or lithium carbonate, during a reaction with sand. As the products of reaction (1) (i.e. two CO molecules and two $H_2$ molecules) have higher enthalpy of combustion than a single $CH_4$ molecule, the reaction of $CO_2$ formed during decomposition of carbonates contained in the batch with even small part of natural gas used for bubbling is energetically advantageous compared to mere directing these gases to the exhaust. This allows either to intensify melting process or to reduce the amount of gas used in furnace heating burners, the latter forming an important economic and environmental advantage, as less natural gas is consumed to deliver the same amount of energy to the melt. Such process can be described as a thermochemical energy recovery based on $CO_2$ from carbonate decomposition.

If the electrode-bubblers of the inventions are arranged at the furnace bottom to form a barrier facilitating the glass melt fining process, the bubbling gas can be selected from air, noble gas (such as helium or argon), or - preferably - steam, which promotes accelerated removal of $SO_3$ from the glass melt by taking part in the following reaction:

$$SO_{4(melt)}^{2-} + 3Si - O - Si + 2H_2O_{(gas)} \leftrightarrow SO_2 + \frac{1}{2}O_2 + 4Si - OH + 2Si - O^- \quad (2)$$

(2) By taking part in the reaction (2) steam used for bubbling the glass melt accelerates sulphate fining of molten silicate glass.

**Brief Description of Drawings**

The invention is presented in more detail in embodiments shown in the drawings, in which:

Fig. 1 shows a tip of an electrode-bubbler according to the first embodiment of the invention;

fig. 2a shows an electrode-bubbler assembly in a refractory block, wherein the electrode-bubbler is the same as shown in fig. 1;

fig. 2b shows a detailed view of the tip of the electrode-bubbler assembly shown in fig. 2a;

fig. 3 shows a tip of an electrode-bubbler according to the second embodiment of the invention;

fig. 4a shows an electrode-bubbler assembly in a refractory block, wherein the electrode-bubbler is the same as shown in fig. 3;

fig. 4b shows a detailed view of the tip of the electrode-bubbler assembly shown in fig. 4a;

figs. 5a-5h show top views of various arrangements of electrode-bubblers according to the invention at the bottom of the furnace.

**Detailed Description of Preferred Embodiments of the Invention**

**Example 1**

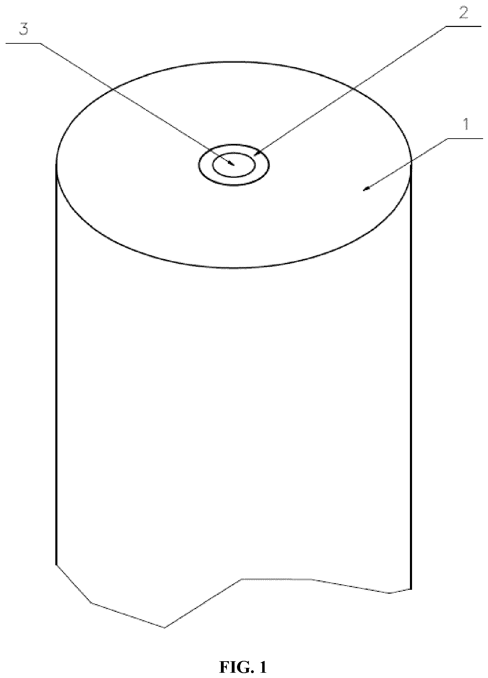

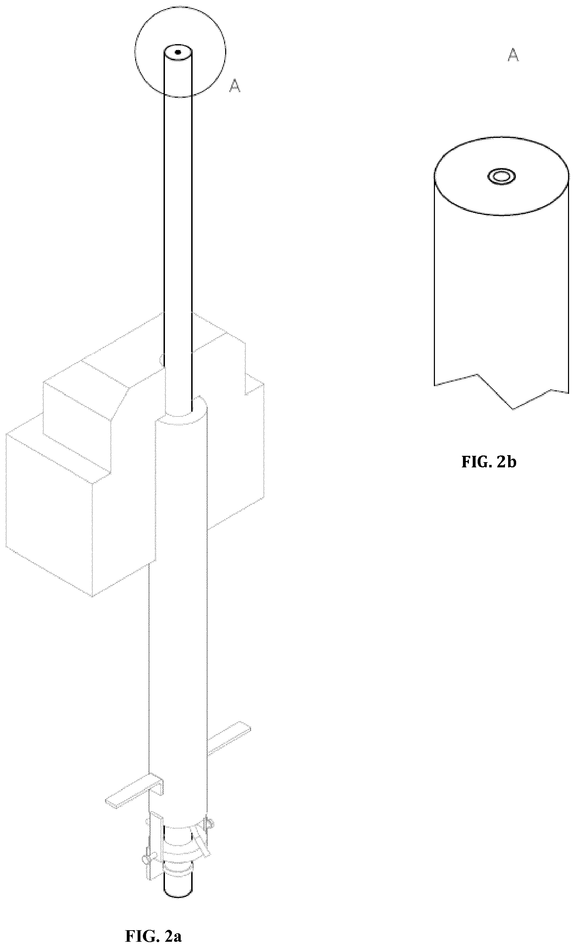

Fig. 1, 2a and 2b illustrate a first embodiment of the electrode-bubbler according to the invention combining both functionalities, i.e. electrical conductivity and gas permeability, in a single compact structure. More specifically, the electrode-bubbler shown in fig. 1 comprises a thick-walled hollow tubular element 1 made of an electrically conductive material, such as in particular molybdenum. An protective insert **2** made of $MoSi_2$ is provided inside the hollow tubular element **1.** The protective insert **2** comprises a longitudinal gas-transporting channel **3** for injecting the gas into the melt. The gas-transporting channel **3** on one end is connected to a gas feeding station through an elastic hose (not shown), while the opposite end of the channel **3** is open to the furnace interior. Such electrode-bubbler is installed in a refractory block (typically made of Alumina-Zirconia-Silica, AZS) having a hole with a diameter matching the external diameter of the hollow tubular element **1,** which typically is 2.5 inch (6.35 cm). Such assembly is shown in fig. 2a, while fig. 2b shows the detailed view of the electrode-bubbler tip immersed in the melt, which essentially corresponds to fig. 1. Inside the refractory block holes should be provided having diameters corresponding to holder type employed. All holders types designed for molybdenum electrodes can be used with no specific adjustment required for electrode-bubblers according to the invention. Further, typical arrangement of water cooling hoses and electrical cable connections can be used with electro-bubblers according to the invention with no modification required. The electrode-bubbler of the embodiment shown in fig. 1, 2a and 2b allows to inject bubbling gas into the melt in a continuous or periodical (impulse) manner with almost no risk of the gas-transporting channel **3** being plugged by solidified glass. As the tubular protective insert **2** made of $MoSi_2$ is inserted into a hollow tubular element **1** (effectively realising the electrode function), which in turn is mounted in the water-cooled holder of the assembly, it is possible to switch on/off the gas flow with no risk of permanent plugging of the channel **3**. More specifically, once the gas flow is switched off, the molten glass enters the channel **3** and solidifies as a result of lower temperature provided by cooling water flow in the holder. Before switching the gas flow again on, the water flow rate in the holder cooling system is reduced, resulting in increase of temperature inside the channel **3**. Once the solidified glass plug reaches its low viscous state the gas flow is switched on again, pushing less viscous liquified glass back to the tank and subsequently start bubbling into the melt.

**Example 2**

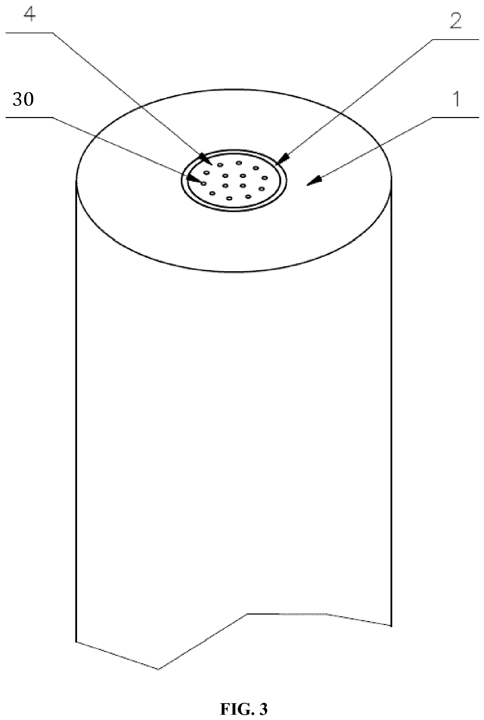

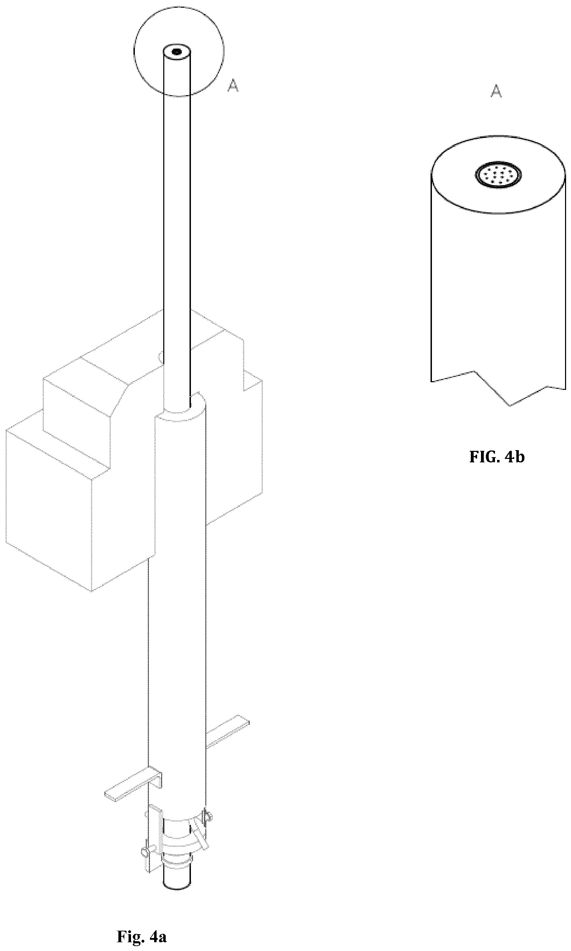

Fig. 3, 4a and 4b illustrate a second embodiment of the electrode-bubbler according to the invention combining both functionalities, i.e. electrical conductivity and gas permeability, in a single compact structure. The design of the electrode-bubbler of the second embodiment differs from the one of the first embodiment described above in that inside the longitudinal gas-transporting channel **3** of the protective insert **2** a gas-permeable rod **4** made of fused alumina is coaxially arranged, comprising plurality of channels **30** for injecting the gas into the melt. All the other aspects, such as arrangement in an assembly in a refractory block (shown in fig. 4a) are similar to these already discussed above for the first embodiment, and will not be repeated here.

**Example 3**

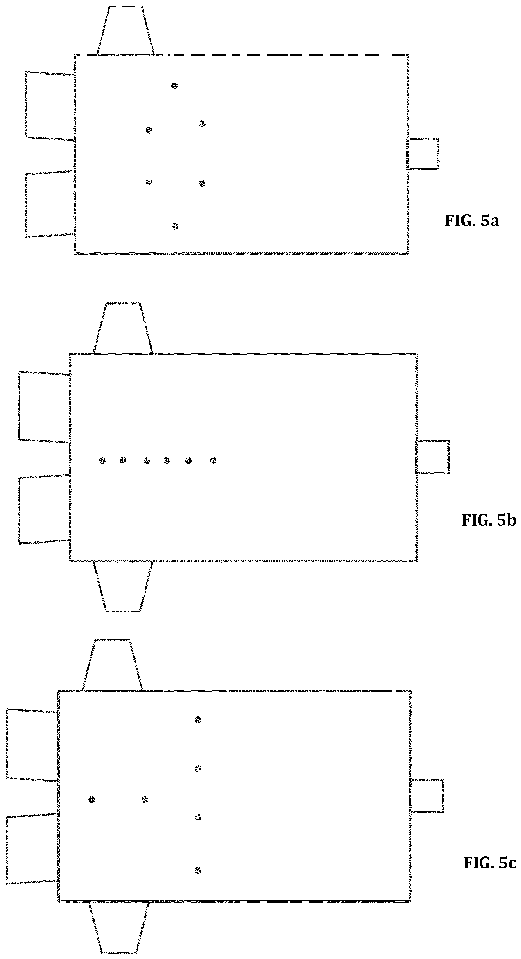

Fig. 5a shows a top view of a geometrically dispersed arrangement of the electrode-bubblers of the present invention at the bottom of the furnace melting zone. Such configuration is the most suitable for batch heat up acceleration and increase of reaction rate between batch components (due to effective reaction product removal from grains surfaces).

**Example 4**

Fig. 5b is a top view of the electrode-bubblers of the present invention arranged in the batch melting zone in a single line along the longitudinal axis of the furnace. This configuration is advantageous in case of furnaces having two doghouses for evoking the lateral convective currents accelerating the batch heat up.

**Example 5**

Fig. 5c is a top view of a T-shaped configuration of the electrode-bubblers of the invention, which is suitable for separation of a melting zone (where vigorous mixing of glass melt with batch is beneficial) from a fining and refining zone (where smooth plug flow of molten glass is more advantageous). The electrode-bubblers configured in two perpendicular lines forming together a T-shape in a top view enhance reactions between batch components as well as sand dissolution, and further prevent glass in return current from hot spot area to flow up to end wall of furnace (and mix with a primary melt).

### Example 6

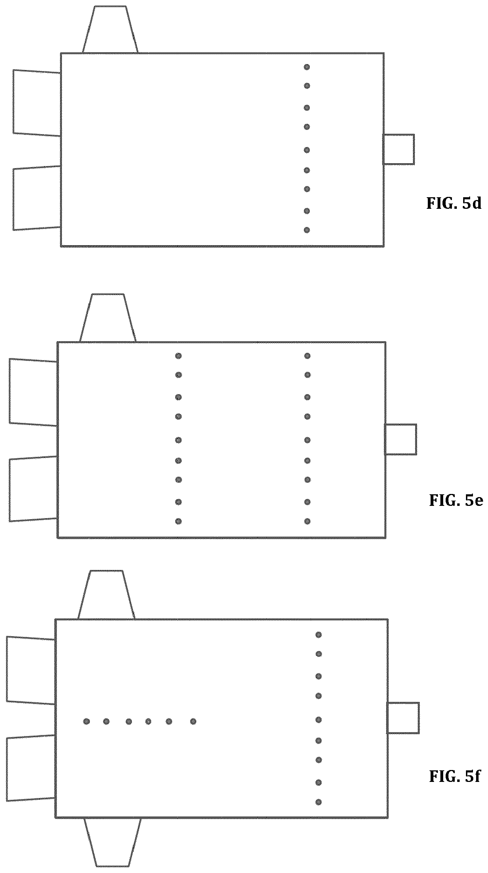

Fig. 5d shows a top view of a single barrier line, arranged transversely to the longitudinal axis of the furnace, wherein the barrier is composed of a plurality of electrode-bubblers according to the invention and located in the fining zone. Replacing barriers composed of classical heating electrodes or bubblers with a single line composed exclusively of the electrode-bubblers of the invention allows to better control and coordinate the Joule-heating and bubbling processes, in particular when operated in a sequential (such as alternate) manner, to effectively accelerate the fining step.

### Example 7

Fig. 5e is a top view the electrode-bubblers of the present invention arranged in the batch melting zone in two separate parallel barrier lines, transversely to the longitudinal axis of the furnace (i.e. an additional barrier is provided upstream with respect to the arrangement shown in fig. 5d). The first barrier line is arranged approximately at 0.5-0.6 of the melting tank length, measured from the end at which the batch is charged. This first barrier separates a melting zone (where vigorous mixing of glass melt with batch is required) from a fining and refining zone (where smooth plug flow of molten glass is more advantageous). The second line of electrode-bubblers is located at 0.7-0.8 of the melting tank length and enables to use advantages of electrodes and bubbling nozzles (integrated as electrode-bubblers) operating sequentially (e.g. alternately) for effective acceleration of the fining step, similarly as in case of the single barrier shown in fig. 5d.

### Example 8

Fig. 5f shows a top view of a combination of a line of electrode-bubblers of the invention arranged centrally in the batch charging area along the furnace longitudinal axis and a second line of electrode-bubblers of the invention forming a barrier transverse to the furnace longitudinal axis in a hot spot plane. The first line accelerates batch melting, while the second one improves fining process conditions.

### Example 9

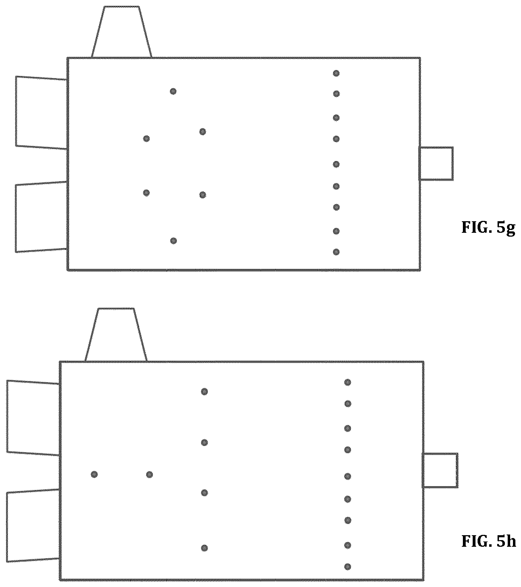

Fig. 5g is a top view of a combination of configurations shown in fig. 5a and 5d, and accordingly allows to achieve advantages of both these arrangements of the electrode-bubblers of the invention.

### Example 10

Fig. 5h is a top view of a combination of configurations shown in fig. 5c and 5d, and accordingly allows to achieve advantages of both these arrangements of the electrode-bubblers of the invention.
In some special cases combinations of electrode-bubbler systems with standard electrode configuration or bubbling nozzle configuration (in line or dispersed) are possible. However, for the sake of optimum process control and coordination of Joule heating and bubbling, use of electrode-bubblers of the present invention in all positions is recommended. Electrode-bubblers according to the invention can be coupled with standard electrodes in a single electric circuit. Any of the electrode-bubblers being a part of a heating-bubbling system can be switched on/off during the glass melting process according to specific technological needs.

### Claims

1. A method of continuous intensive glass melting in a glass furnace operating with gas or oil combustion in air or oxygen as a main source of heating from a batch containing raw materials of mineral and/or chemical origin, wherein the batch is continuously fed to the furnace and Joule-heated by a plurality of electrodes and a plurality of bubbling gas streams is injected into a glass melt, wherein each electrode is shaped as a hollow tube to form an integrated electrode-bubbler for both heating the batch and injecting a bubbling gas stream into the melt, whereby the integrated electrode-bubblers are arranged at the bottom of the melting tank of the furnace **characterised in that** the arrangement of the integrated electrode bubblers at the bottom of the melting tank at least partially overlaps the longitudinal axis of the melting tank, whereby the bubbling gas is selected from:

   (i) a hydrocarbon gas or a mixture of such gases;
   (ii) steam.

2. The method according to claim 1, wherein the integrated electrode-bubblers are arranged in a melting zone and/or sand grain dissolution zone and/or fining zone and/or refining zone.

3. The method according to claim 1 or 2, wherein the bubbling gas is a natural gas.

4. The method according to any of claims 1-3, wherein the bubbling gas stream is injected into the glass melt either in a continuous manner or periodically.

5. The method according to any of claims 1-4, wherein each integrated electrode-bubbler is connected to at least one alternating current (AC) circuit.

6. An integrated electrode-bubbler for carrying out the method of continuous intensive glass melting defined in any of the claims 1-5, comprising a thick-walled hollow tubular element (1) open on both sides and made of an electrically conductive material, whereby inside the hollow tubular element (1) a protective insert (2) also open on both sides and made of $MoSi_2$ is provided, comprising a longitudinal gas-transporting channel (3) for injecting the bubbling gas into the glass melt, wherein inside the longitudinal gas-transporting channel (3) of the protective insert (2) a gas-permeable rod (4) is coaxially arranged, comprising a plurality of channels (30) for injecting the bubbling gas into the glass melt.

7. The integrated electrode-bubbler according to claim 6, wherein the hollow tubular element (1) has a cross-section selected from: circular, oval, triangular, square, polygonal, cross-like and star-like.

8. The integrated electrode-bubbler according to claim 6 or 7, wherein the hollow tubular element (1) is made of material resistant to molten glass corrosion, preferably selected from molybdenum, silicon-doped molybdenum, silicon- and boron-doped molybdenum, molybdenum disilicide, tin oxide and graphite.

9. The integrated electrode-bubbler according to claim 6, wherein the gas-permeable rod (4) is made of porous material, in which the channels (30) for injecting the bubbling gas into the glass melt are formed by open pores extending along the longitudinal axis of the rod, whereby the porous material is preferably selected from: porous refractory ceramic materials, such as alumina; porous metals, preferably noble metals; porous ceramic-metallic composites; ceramic-metallic laminates of cylindrical layered structure.

10. The integrated electrode-bubbler according to any of the claims 6-9, wherein the channels (30) for injecting the bubbling gas into the glass melt are provided with an oxidation protecting layer, preferably made of $MoSi_2$.

**Patentansprüche**

1. Ein Verfahren zum kontinuierlichen, intensiven Glasschmelzen in einem Glasofen, der mit Gas- oder Ölverbrennung in Luft oder Sauerstoff als Hauptheizquelle eines Gemenges betrieben wird, das Rohmaterialien mineralischen und/oder chemischen Ursprungs enthält, wobei das Gemenge dem Ofen kontinuierlich zugeführt und durch eine Vielzahl von Elektroden durch Joule-Erwärmung erhitzt wird und eine Vielzahl von Bubblinggasströmen in eine Glasschmelze injiziert wird, wobei jede Elektrode als hohles Rohr geformt ist, um einen integrierten Elektroden-Bubbler zu bilden, um sowohl das Gemenge zu erhitzen als auch einen Bubblinggasstrom in die Schmelze zu injizieren, wobei die integrierten Elektroden-Bubbler am Boden der Schmelzwanne des Ofens angeordnet sind, **dadurch gekennzeichnet, dass** die Anordnung der integrierten Elektroden-Bubbler am Boden der Schmelzwanne zumindest teilweise die Längsachse der Schmelzwanne überlappt, wobei das Bubblinggas ausgewählt ist aus:

(i) einem Kohlenwasserstoffgas oder einem Gemisch derartiger Gase;
(ii) Dampf.

2. Das Verfahren nach Anspruch 1, wobei die integrierten Elektroden-Bubbler in einer Schmelzzone und/oder Sandkornauflösungszone und/oder Läuterungszone und/oder Raffinationszone angeordnet sind.

3. Das Verfahren nach Anspruch 1 oder 2, wobei das Bubblinggas ein Erdgas ist.

4. Das Verfahren nach irgendeinem der Ansprüche 1-3, wobei der Bubblinggasstrom entweder kontinuierlich oder periodisch in die Glasschmelze injiziert wird.

**EP 3 647 280 B1**

5. Das Verfahren nach irgendeinem der Ansprüche 1-4, wobei jeder integrierte Elektroden-Bubbler an zumindest einen Wechselstromkreis (AC-Kreis) angeschlossen ist.

6. Ein Integrierter Elektroden-Bubbler zur Durchführung des in irgendeinem der Ansprüche 1-5 definierten Verfahrens zum kontinuierlichen, intensiven Glasschmelzen, umfassend ein dickwandiges, hohles, beidseitig offenes Röhrenelement (1) aus einem elektrisch leitfähigen Material, wobei innerhalb des hohlen Röhrenelements (1) ein ebenfalls beidseitig offener Schutzeinsatz (2) aus MoSi$_2$ vorgesehen ist, umfassend einen längsverlaufenden, gasführenden Kanal (3) zum Injizieren des Bubblinggases in die Glasschmelze, wobei innerhalb des längsverlaufenden, gasführenden Kanals (3) des Schutzeinsatzes (2) ein gasdurchlässiger Stab (4) koaxial angeordnet ist, umfassend eine Vielzahl von Kanälen (30) zum Injizieren des Bubblinggases in die Glasschmelze.

7. Der Integrierter Elektroden-Bubbler nach Anspruch 6, wobei das hohle Röhrenelement (1) einen Querschnitt aufweist, der ausgewählt ist aus: kreisförmig, oval, dreieckig, quadratisch, polygonal, kreuzförmig und sternförmig.

8. Der Integrierter Elektroden-Bubbler nach Anspruch 6 oder 7, wobei das hohle Röhrenelement (1) aus einem Material besteht, das gegen die Korrosion durch geschmolzenes Glas beständig ist, vorzugsweise ausgewählt aus Molybdän, mit Silizium dotiertem Molybdän, mit Silizium und Bor dotiertem Molybdän, Molybdändisilicid, Zinnoxid und Graphit.

9. Der Integrierter Elektroden-Bubbler nach Anspruch 6, wobei der gasdurchlässige Stab (4) aus porösem Material ist, in dem die Kanäle (30) zum Injizieren des Bubblinggases in die Glasschmelze durch offene Poren gebildet werden, die sich entlang der Längsachse des Stabes erstrecken, wobei das poröse Material vorzugsweise ausgewählt ist aus: porösen feuerfesten keramischen Materialien, wie Aluminiumoxid; porösen Metallen, vorzugsweise Edelmetallen; porösen Keramik-Metall-Verbundwerkstoffen; Keramik-Metall-Laminaten mit zylindrischer Schichtstruktur.

10. Der Integrierter Elektroden-Bubbler nach irgendeinem der Ansprüche 6-9, wobei die Kanäle (30) zum Injizieren des Bubblinggases in die Glasschmelze mit einer Oxidationsschutzschicht, vorzugsweise aus MoSi$_2$, versehen sind.

**Revendications**

1. Un procédé de fusion intensive et continue du verre dans un four à verre fonctionnant avec une combustion de gaz ou de pétrole dans l'air ou l'oxygène comme source principale de chauffage à partir d'un lot contenant des matières premières d'origine minérale et/ou chimique, dans lequel le lot est alimenté en continu dans le four et chauffé par effet Joule par une pluralité d'électrodes et une pluralité de flux de gaz barbotants est injectée dans le verre fondu, dans lequel chaque électrode a la forme d'un tube creux pour former une électrode-barboteur intégrée permettant à la fois de chauffer le lot et d'injecter un flux de gaz barbotants dans la matière fondue, les électrodes-barboteurs intégrées étant disposées au fond de la cuve de fusion du four **caractérisé en ce que** la disposition des électrodes-barboteurs intégrées au fond de la cuve de fusion chevauche au moins partiellement l'axe longitudinal de la cuve de fusion, le gaz barbotant étant choisi parmi les suivants:

    (i) un gaz d'hydrocarbure ou un mélange de tels gaz ;
    (ii) vapeur.

2. Le procédé selon la revendication 1, dans lequel les électrodes-barboteurs intégrées sont disposées dans une zone de fusion et/ou une zone de dissolution des grains de sable et/ou une zone d'affinage et/ou une zone de raffinage.

3. Le procédé selon la revendication 1 ou 2, dans lequel le gaz barbotant est un gaz naturel.

4. Le procédé selon l'une des revendications 1 à 3, dans lequel le flux de gaz barbotant est injecté dans le verre fondu soit de manière continue, soit de manière périodique.

5. Le procédé selon l'une des revendications 1 à 4, dans lequel chaque électrode-barboteur intégrée est reliée à au moins un circuit de courant alternatif (CA).

6. Une électrode-barboteur intégrée pour la mise en oeuvre du procédé de fusion intensive continue du verre défini dans l'une des revendications 1 à 5, comprenant un élément tubulaire creux à paroi épaisse (1) ouvert des deux côtés et constitué d'un matériau conducteur d'électricité, de sorte qu'à l'intérieur de l'élément tubulaire creux (1) est prévu un insert de protection (2) également ouvert des deux côtés et constitué de MoSi$_2$, comprenant un canal longitudinal de transport de gaz (3) pour injecter le gaz barbotant dans le verre fondu, dans laquelle, à l'intérieur du canal longitudinal de transport de gaz (3) de l'insert de protection (2), une tige perméable au gaz (4) est disposée de manière coaxiale, comprenant une pluralité de canaux (30) pour injecter le gaz barbotant dans le verre fondu.

7. L'électrode-barboteur intégrée selon la revendication 6, dans laquelle l'élément tubulaire creux (1) a une section transversale choisie parmi les suivantes : circulaire, ovale, triangulaire, carrée, polygonale, en forme de croix et en forme d'étoile.

8. L'électrode-barboteur intégrée selon la revendication 6 ou 7, dans laquelle l'élément tubulaire creux (1) est réalisé en un matériau résistant à la corrosion du verre fondu, de préférence choisi parmi le molybdène, le molybdène dopé au silicium, le molybdène dopé au silicium et au bore, le disiliciure de molybdène, l'oxyde d'étain et le graphite.

9. L'électrode-barboteur intégrée selon la revendication 6, dans laquelle la tige perméable au gaz (4) est réalisée en matériau poreux, dans laquelle les canaux (30) pour injecter le gaz barbotant dans le verre fondu sont formés par des pores ouverts qui s'étendent le long de l'axe longitudinal de la tige, le matériau poreux étant de préférence choisi parmi : les matériaux céramiques réfractaires poreux, tels que l'alumine ; les métaux poreux, de préférence les métaux nobles ; les composites céramo-métalliques poreux ; les stratifiés céramo-métalliques de structure cylindrique en couches.

10. L'électrode-barboteur intégrée selon l'une des revendications 6 à 9, dans laquelle les canaux (30) pour injecter le gaz barbotant dans le verre fondu sont pourvus d'une couche de protection contre l'oxydation, de préférence en MoSi$_2$.

**FIG. 1**

FIG. 2a

FIG. 2b

**FIG. 3**

A

**FIG. 4b**

A

**Fig. 4a**

FIG. 5a

FIG. 5b

FIG. 5c

FIG. 5d

FIG. 5e

FIG. 5f

FIG. 5g

FIG. 5h

EP 3 647 280 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1594496 A
- US 2417913 A
- US 2600490 A
- US 2978526 A
- US 4012218 A
- US 3576385 A
- US 2254079 A
- US 2387222 A
- US 2909005 A
- US 3294512 A
- US 3397973 A
- US 3622296 A
- US 3853524 A
- US 5188649 A
- US 5340372 A
- US 3268320 A
- US 6334337 B
- US 3305340 A
- WO 2014036979 A1